**Europäisches Patentamt**

**European Patent Office**

**Office européen des brevets**

(11) Veröffentlichungsnummer: **0 052 826**
**B1**

# EUROPÄISCHE PATENTSCHRIFT

(45) Veröffentlichungstag der Patentschrift:
**27.08.86**

(21) Anmeldenummer: **81109582.7**

(22) Anmeldetag: **10.11.81**

(51) Int. Cl.⁴: **B 62 D 5/30**

54 **Lenkungsnotschaltventil.**

(30) Priorität: **24.11.80 US 209763**

(43) Veröffentlichungstag der Anmeldung:
**02.06.82 Patentblatt 82/22**

(45) Bekanntmachung des Hinweises auf die Patenterteilung:
**27.08.86 Patentblatt 86/35**

(84) Benannte Vertragsstaaten:
**DE FR GB IT**

(56) Entgegenhaltungen:
**AT - B - 237 460**
**DE - U - 1 856 360**
**GB - A - 2 017 848**
**US - A - 3 174 500**
**US - A - 4 160 490**
**US - A - 4 217 968**

(73) Patentinhaber: **DEERE & COMPANY, 1 John Deere
Road, Moline Illinois 61265 (US)**

(72) Erfinder: **Gage, Douglas Millard, 2215 Carter Road,
Dubuque Iowa 52001 (US)**

(74) Vertreter: **Gramm, Werner, Prof. Dipl.-Ing. et al,
Patentanwälte Gramm + Lins Theodor-Heuss-Strasse 2,
D-3300 Braunschweig (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Lenkungsnotschaltventil, bestehend aus

– einer Ventilbohrung mit einem ersten Anschluss für eine Druckmittelquelle und einem zweiten Anschluss für die Lenkungshauptventil;

– einem druckgesteuerten Ventilkolbenschieber, der in der Ventilbohrung hin- und herverschiebbar gelagert ist und zwar zwischen einer Schliessstellung, in der er die Strömungsverbindung zwischen den beiden genannten Anschlüssen unterbricht, und einer Offenstellung, in der die genannte Strömungsverbindung besteht;

– einer Vorsteuerdruckeinrichtung, die mit einem Anschluss für eine Hauptdruckflüssigkeitsquelle in Verbindung steht und den Ventilkolbenschieber in seine Schliessstellung verschiebt, wenn der von der genannten Hauptquelle stammende Flüssigkeitsdruck für die Lenkbetätigung ausreicht;

– einer Feder, die den Ventilkolbenschieber in seine Offenstellung verschiebt, wenn der von der genannten Hauptquelle stammende Flüssigkeitsdruck abfällt; und aus

– einer elektrischen Anzeigeschaltung für den Lenkzustand, die ein erregbares Anzeigeelement und einen Druckschalter aufweist, der den Schaltkreis durch das Anzeigeelement hindurch nur dann schliesst, wenn der Ventilkolbenschieber aus seiner Schliessstellung verschoben wird, wobei der Druckschalter ein von dem Ventilkolbenschieber betätigtes Schalterteil aufweist, das nur in Offenstellung des Ventilkolbenschiebers den Schaltkreis durch das Anzeigeelement hindurch schliesst.

Ein derartiges Ventil lässt sich der US-A-4 160 490 entnehmen. Die an den ersten Anschluss der Ventilbohrung angeschlossene Druckmittelquelle wird hier durch eine Notpumpe gebildet. Das Lenkungsnotschaltventil ist Teil einer Servolenkung und dient dazu, die Servolenkung über die Notpumpe dann mit Druckflüssigkeit zu versorgen, wenn der von einer Hauptdruckflüssigkeitsquelle stammende Flüssigkeitsdruck abfällt. Ist dies der Fall, dann wird dies von dem genannten Anzeigeelement der elektrischen Anzeigeschaltung dem Fahrer des Fahrzeuges angezeigt.

Ein Nachteil dieser vorbekannten Ausführungsform ist darin zu sehen, dass infolge von kurzen Druckstössen der Ventilkolbenschieber eine oszillierende Bewegung ausführen und dadurch eine vorzeitige Betätigung des Anzeigeelementes erfolgen kann.

Durch die GB-A-2 017 848 ist die Anwendung eines Druckspeichers auf ein hydraulisches Lenksystem bekannt.

Das DE-U-1 856 360 beschreibt ein selbsttätig durch den Flüssigkeitsdruck sich öffnendes Schieberventil mit einer Kontakteinrichtung zum Schalten eines Signalstromkreises. Der Schieber dieses Ventils ist als auf einem Führungsansatz gelagerte Hülse ausgestaltet, wobei die Lage der Schieberöffnungen, sowie die Länge des Ansatzes derart ausgewählt sind, dass eine Verzögerung beim Schliessen der Kontakte erreicht werden kann. Diese Verzögerung erfolgt, während der Schieber von seiner Schliess- in seine Offenstellung verschoben wird und zwar durch eine Vergrösserung des Abstandes der Strecke, die zu überstreichen ist. Ferner ist hier auf die Notwendigkeit eines Druckausgleiches zwischen den gegenüberliegenden Kammern hingewiesen, damit die freie Rückkehr des Schiebers unter Verzögerung erfolgen kann.

Die US-A-3 174 500 offenbart einen Ventilkolbenschieber, der durch eine Arretierung in seiner Schliessstellung gehalten wird. Die durch diese Einrichtung gelöste Aufgabe besteht darin, dass das Ventil sich bei verschiedenen Druckwerten öffnet und schliesst, bei Druckänderungen innerhalb eines bestimmten Bereiches aber nicht betätigt wird.

Der Erfindung liegt die Aufgabe zugrunde, das eingangs erläuterte Lenkungsnotschaltventil so zu verbessern, dass eine vorzeitige Betätigung des Anzeigelementes aufgrund eines zeitlich nur kurzen Druckabfalls in der Hauptdruckflüssigkeitsquelle vermieden wird und die Betätigung des Schiebers sowie des Druckschalters in konstruktiv besonders einfacher Weise erfolgt.

Diese Aufgabe wird gemäss der Erfindung durch folgende Merkmale gelöst:

a) Der erste Anschluss der Ventilbohrung ist für einen Druckspeicher;

b) eine Verzögerungseinrichtung verringert die Verschiebegeschwindigkeit des Ventilkolbenschiebers von seiner Schliess- in seine Offenstellung;

c) die Vorsteuerdruckeinrichtung weist einen sich axial bis in die Ventilbohrung erstreckenden Durchgangskanal auf, in dem ein Stift hin- und herverschiebbar angeordnet ist, dessen eines Ende mit dem genannten Anschluss für die Hauptflüssigkeitsquelle in Verbindung steht;

d) das vom Ventilkolbenschieber betätigte Schaltteil ist dieser Stift, der bei Offenstellung des Ventilkolbenschiebers an einem elektrischen Kontakt anliegt.

Die Verschiebung des Ventilkolbenschiebers aus seiner Schliessstellung heraus wird durch die erfindungsgemäss vorgesehene Verzögerungseinrichtung mit verringerter Geschwindigkeit durchgeführt, so dass dadurch sichergestellt ist, dass die optische und/oder akkustische Druckabfallanzeige wirklich erst dann erfolgt, wenn ein echter Druckabfall, nicht aber nur kurze Druckstösse vorliegen. Durch die Doppelfunktion des Stiftes, der sowohl den Ventilkolbenschieber als auch den Druckschalter betätigt, erhält man eine konstruktiv besonders einfache und sicher arbeitende Ausführungsform.

Um bei nur kurzzeitigen Druckstössen eine oszillierende Bewegung des Ventilkolbenschiebers mit Sicherheit auszuschliessen, ist es vorteilhaft, wenn der Ventilkolbenschieber durch eine Arretierung lösbar in seiner Schliessstellung gehalten wird.

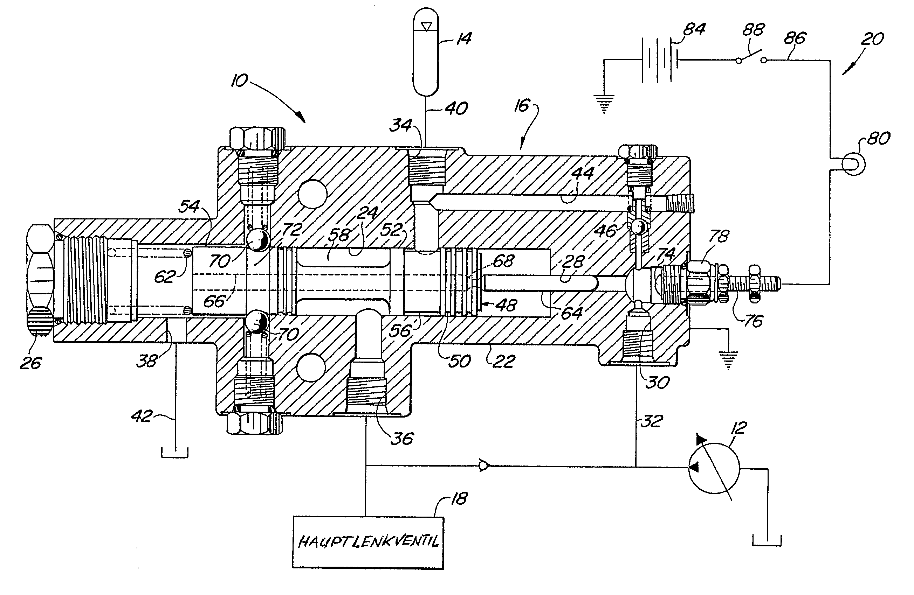

In der Zeichnung ist eine als Beispiel dienende Ausführungsform der Erfindung im Querschnitt dargestellt.

Der in der Zeichnung dargestellte Teil einer Servolenkung ist insgesamt mit dem Bezugszeichen 10 gekennzeichnet. Vorgesehen ist eine Pumpe 12, die von einem Fahrzeugantrieb angetrieben wird und über ein Notlenkventil 16 an einen Druckspeicher 14 angeschlossen ist. Pumpe 12 und Ventil 16 sind ferner an ein Hauptlenkventil 18 angeschlossen, das in der Zeichnung lediglich durch ein rechteckiges Kästchen dargestellt ist.

Das Notlenkventil 16 umfasst einen Druckschalter, der Teil einer Lenkzustandsanzeigeschaltung 20 ist.

Das Notlenkventil 16 besteht aus einem Ventilkörper 22 mit einer Ventilbohrung 24, deren linkes Ende durch einen Schraubstopfen 26 verschlossen ist. Ein Durchgangskanal 28 fluchtet in axialer Richtung mit der Ventilbohrung 24 und steht mit einem Einlass 30 in Verbindung, der über eine Leitung 32 an den Auslass der Pumpe 12 angeschlossen ist. Von rechts nach links gesehen münden in die Ventilbohrung 24 mehrere in Reihe hintereinander mit Abstand liegende Anschlüsse und zwar zuerst ein Auflade- bzw. Ablassanschluss 34, ein Auslass 36 für die Lenkdruckflüssigkeit und ein Sumpfanschluss 38. Der erste Anschluss 34 ist über eine Leitung 40 an den Druckspeicher 14 angeschlossen, während das Hauptlenkventil 18 über eine Zweigleitung an den genannten Auslass 36 und der Sumpfanschluss 38 über eine Leitung 42 an den Sumpf angeschlossen sind.

Druckflüssigkeit gelangt vom Einlass 30 zum Druckspeicher 14 über einen Druckspeicherladekanal 44, der mit einem vertikalen Abschnitt in den Durchgangskanal 28 und mit einem horizontalen Abschnitt in den Auflade- bzw. Ablassanschluss 34 mündet. In den Vertikalabschnitt des Druckspeicherladekanals 44 ist ein Einwegventil 46 geschaltet, das eine Strömung der Druckflüssigkeit nur in Richtung vom Einlass 30 zum Druckspeicher 14, nicht aber in umgekehrter Richtung zulässt.

In der Ventilbohrung 24 ist axial verschiebbar ein Ventilkolbenschieber 48 zur Steuerung der Druckflüssigkeitsverbindung zwischen den Anschlüssen 34 und 36 angeordnet. Der Ventilkolbenschieber 48 weist an seinem rechten Ende einen Kolbenabschnitt 50, im mittleren Bereich einen Kolbenabschnitt 52 und an seinem linken Ende einen Kolbenabschnitt 54 auf, wobei zwischen den Kolbenabschnitten 50 und 52 eine flache Ausdrehung 56 und zwischen den Kolbenabschnitten 52 und 54 eine tiefere Ausdrehung 58 vorgesehen sind. Eine Schraubendruckfeder 62 stützt sich mit ihrem einen Ende am Schraubstopfen 26 und mit ihrem anderen Ende am linken Kolbenabschnitt 54 ab und übt somit auf den Ventilkolbenschieber eine Federkraft aus, die einer gegen das rechte Ende des Ventilkolbenschiebers wirkenden Kraft entgegensteht. Letztere wird von einem Stift 64 übertragen, der hin- und herverschiebbar in dem Durchgangskanal 28 angeordnet ist und somit mit seinem rechten Ende dem Systemdruck am Einlass 30 ausgesetzt ist. Um eine freie Verschiebbarkeit des Ventilkolbenschiebers 48 sicherzustellen, weist er einen axial durch ihn hindurchlaufenden Druckausgleichskanal 66 auf, der mit seinem linken Ende in Strömungsverbindung mit dem Sumpfanschluss 38 ist. Das rechte Ende des Druckausgleichskanal 66 bildet eine Drosselbohrung 68, die zur Regulierung der Geschwindigkeit dient, mit der die Verschiebung des Ventilkolbenschiebers 48 in der Ventilbohrung 24 erfolgt.

Befindet sich der Ventilkolbenschieber 48 in seiner normalen, in der Zeichnung dargestellten Arbeitsstellung, so liegt der Kolbenabschnitt 52 zwischen dem Anschluss 34 und dem Auslass 36 und verhindert somit eine Entladung des Druckspeichers 14. Der Ventilkolbenschieber 48 wird in dieser Stellung arretiert, um nicht auf Druckstösse zu reagieren. Die Arretierung besteht aus mehreren federbelasteten Arretierungskugeln 70, die in eine ringförmige Arretierungsnut 72 im Kolbenabschnitt 54 eintauchen. Fällt jedoch der Druck am Einlass 30 auf einen vorbestimmten Minimalwert ab, der geringer ist als der zu erwartende geringste Druck im Bereich der üblichen Systemdruckabweichungen, dann überwindet die Feder 62 die von dem Stift 64 sowie die von den Arretierungskugeln 70 auf den Ventilkolbenschieber ausgeübte Kraft und verschiebt den Ventilkolbenschieber 48 nach rechts in seine Not- bzw. Offenstellung, in der der mittlere Kolbenabschnitt 52 nunmehr rechts vom Anschluss 34 liegt, so dass der Druckspeicher 14 seine gespeicherte Druckflüssigkeit über den Auslass 36 zum Hauptlenkventil 18 leiten kann, um so trotz des Druckabfalls die Wirksamkeit des Lenksystems aufrechtzuerhalten.

In der genannten Offenstellung liegt das rechte Ende des Ventilkolbenschiebers 48 an dem linken Ende des Stiftes 64 an und drückt diesen mit seinem rechten Ende gegen einen Kopf 74 einer elektrisch isolierten Schraube 76, die in einen Stopfen 78 eingeschraubt ist, der das rechte Ende des Durchgangskanals 28 verschliesst. Der Stift 74 bildet mit dem Kopf 74 der Schraube 76 sich gegenüberliegende Kontakte eines normalerweise offenen Schalters der Lenkzustandsanzeigeschaltung 20. Um den Fahrer des mit der in Rede stehenden Servolenkung ausgestatteten Fahrzeuges darauf hinzuweisen, dass der Druck im System unter den üblichen Arbeitsdruck abgefallen ist, und dass das System auf einer Notschaltung arbeitet, bei der die Druckflüssigkeit von dem Druckspeicher 14 geliefert wird, ist ein entsprechendes Anzeigeelement vorgesehen, das im Ausführungsbeispiel eine Anzeigelampe 80 ist, die in die Schaltung 20 eingeschaltet ist. Dabei liegt die Anzeigelampe 80 in Reihe mit dem überlicherweise geöffneten, durch den Schraubenkopf 74 und den Stift 64 gebildeten Druckschalter. Eine Stromquelle, dargestellt als Batterie 84, ist an eine Stromzuführungsleitung 86 angeschlossen in die ein Ein-Aus-Schalter 88 geschaltet ist, der vorzugsweise in den Zündschalter des Fahrzeugs integriert ist, um dadurch immer geschlossen zu sein, wenn das Fahrzeug im Betrieb ist. Unter üblichen Arbeitsbedingungen liegt also der Stift 64 im Abstand vom Schraubenkopf 74, so dass der Schaltkreis hier geöffnet ist und kein Strom durch die Anzeigelampe 80 fliesst. Erst bei einem Druckabfall erfolgt die vorstehend beschriebene Verschiebung des Ventilkolbenschiebers und damit des Stiftes 64 nach rechts, bis letzterer den Schraubenkopf 74 berührt und dadurch die Anzeigelampe 80 aufleuchten lässt. Die Grösse der Drosselbohrung 68 bestimmt die Geschwindigkeit, mit der der Ventilkolbenschieber 48 nach seiner Freigabe von den Arretierungskugeln 70 nach rechts verschoben wird. Dadurch erhält man eine bestimmte Verzögerung zwischen dem Augenblick, in dem der Ventilkolbenschieber von den Arretierungskugeln 70 freigegeben wird und dem Augenblick, in dem der Stift 64 in Berührung mit dem Schraubenkopf 74 kommt. Diese Verzögerung wird vorgesehen, um eine vorzeitige Erregung der Anzeigelampe 80 zu verhindern, was z. B. bei Druckstössen im Hydrauliksystem auftreten könnte.

## Patentansprüche

1. Lenkungsnotschaltventil (16), bestehend aus
– einer Ventilbohrung (24) mit einem ersten Anschluss (34) für eine Druckmittelquelle und einem zweiten Anschluss (36) für ein Lenkungshauptventil (18);
– einem druckgesteuerten Ventilkolbenschieber (48), der in der Ventilbohrung (24) hin- und herverschiebbar gelagert ist und zwar zwischen einer Schliesssstellung, in der er die Strömungsverbindung zwischen den beiden genannten Anschlüssen (34, 36) unterbricht, und einer Offenstellung, in der die genannte Strömungsverbindung besteht;
– einer Vorsteuerdruckeinrichtung (28, 30, 64), die mit einem Anschluss (30) für eine Hauptdruckflüssigkeitsquelle (12) in Verbindung steht und den Ventilkolbenschieber (48) in seine Schliesssstellung verschiebt, wenn der von der geannten Hauptquelle (12) stammende Flüssigkeitsdruck für die Lenkbetätigung ausreicht;
– einer Feder (62), die den Ventilkolbenschieber (48) in seine Offenstellung verschiebt, wenn der von der genannten Hauptquelle (12) stammende Flüssigkeitsdruck abfällt; und aus
– einer elektrischen Anzeigeschaltung (20) für den Lenkzustand, die ein erregbares Anzeigeelement (80) und einen Druckschalter (64, 74) aufweist, der den Schaltkreis durch das Anzeigeelement hindurch nur dann schliesst, wenn der Ventilkolbenschieber (48) aus seiner Schliesssstellung verschoben wird, wobei der Druckschalter (64, 74) ein von dem Ventilkolbenschieber (48) betätigtes Schalterteil (64) aufweist, das nur in Offenstellung des Ventilkolbenschiebers den Schaltkreis durch das Anzeigeelement (80) hindurch schliesst; gekennzeichnet durch folgende Merkmale:
a) Der erste Anschluss (34) der Ventilbohrung (24) ist für einen Druckspeicher (14);
b) eine Verzögerungseinrichtung (66, 68) verringert die Verschiebegeschwindigkeit des Ventilkolbenschiebers (48) von seiner Schliess- in seine Offenstellung;
c) die Vorsteuerdruckeinrichtung (28, 30, 64) weist einen sich axial bis in die Ventilbohrung (24) erstreckenden Durchgangskanal (28) auf, in dem ein Stift (64) hin- und herverschiebbar angeordnet ist, dessen eines Ende mit dem genannten Anschluss (30) für die Hauptdruckflüssigkeitsquelle (12) in Verbindung steht;
d) das vom Ventilkolbenschieber (48) betätigte Schaltteil ist dieser Stift (64), der bei Offenstellung des Ventilkolbenschiebers an einem elektrischen Kontakt (74) anliegt.

2. Ventil nach Anspruch 1, dadurch gekennzeichnet, dass die Verzögerungseinrichtung (88, 68) eine Drosselbohrung aufweist, die die beiden sich an die Enden des Ventilkolbenschiebers (48) anschliessenden Flüssigkeitskammern miteinander verbindet.

3. Ventil nach Anspruch 2, dadurch gekennzeichnet, dass sich die Drosselbohrung (66, 68) axial durch den Ventilkolbenschieber (48) hindurch erstreckt.

4. Ventil nach einem der vorhergehenden Ansprüche, dadurch gekennzeichnet, dass der Ventilkolbenschieber (48) durch eine Arretierung (70, 72) lösbar in seiner Schliessstellung gehalten wird.

## Claims

1. Emergency steering valve (16) comprising:
– a valve bore (24) having a first port (34) for a pressure medium source and a second port (36) for a main power steering valve (18);
– a pressure-responsive valve spool (48) reciprocably mounted in the valve bore (24), namely between a closed position wherein it blocks fluid communication between said two ports (34, 36), and an open position wherein said fluid communication is established;
– pilot pressure means (28, 30, 64) connected to a port (30) for a primary source of fluid pressure (12) and shifting the valve spool (48) to its closed position, when the fluid pressure emanating from said primary source (12) is sufficient for the steering operation;
– biasing means (62) shifting the valve spool (48) to its open position, when the fluid pressure emanating from said primary source (12) decreases, and
– an electrical steering-condition indicator circuit (20) including an energizable indicator element (80) and a pressure switch (64, 74) closing the circuit through the indicator element only when the valve spool (48) is shifted away from its closed position, whereby said pressure switch (64, 74) includes a switch member (64) operated by the valve spool (48) and closing the circuit through the indicator element (80) only when the valve spool is in its open position, characterized by the following features:
a) Said first port (34) of the valve bore (24) is for an accumulator (14);

b) delay means (66, 68) decreases the speed of displacement of the valve spool (48) from its closed to its open position;

c) said pilot pressure means (28, 30, 64) comprises a passage (28) extending axially into the valve bore (24), a pin (64) reciprocably mounted in the passage (28), one end of said pin communicating with said port (30) for the primary source (12) of fluid pressure;

d) the switch means actuated by said valve spool (48) is said pin (64) engaging an electrical contact (74) when the valve spool (48) is in its open position.

2. The valve according to claim 1, wherein the delay means (88, 68) comprises a throttle bore interconnecting the two fluid chambers at the opposite ends of the valve spool (48).

3. The valve according to claim 2, wherein the throttle bore (66, 68) extends axially through the valve spool (48).

4. The valve according to one of the preceding claims, wherein the valve spool (48) is releasably held in its closed position by detent means (70, 72).

**Revendications**

1. Soupape de commande de sécurité ou de secours (16) pour système de direction, comprenant:

– un alésage de soupape (24) muni d'un premier raccord (34) destiné à un accumulateur de pression (source de fluide sous pression) et d'un second raccord (36) destiné à une valve de direction principale (18);

– un tiroir de soupape en forme de piston commandé par la pression (48), monté de façon à pouvoir effectuer des mouvements de va-et-vient en coulissant dans l'alésage de soupape (24), cela entre une position de fermeture dans laquelle il interrompt la communication hydraulique entre les deux raccords (34, 36) précités et une position d'ouverture dans laquelle cette communication est établie;

– un dispositif de commande pilote (28, 30, 64) actionné par la pression, qui est en communication avec un raccord (30) destiné à une source principale de liquide sous pression (12) et qui amène le tiroir (48) dans sa position de fermeture, lorsque la pression de liquide provenant de ladite source principale (12) est suffisante pour actionner le système de direction;

– un ressort (62) qui amène le tiroir (48) dans sa position d'ouverture, lorsque la pression de liquide provenant de ladite source principale (12) diminue; et

– un circuit électrique (20) indicateur de l'état de la direction, qui comporte un élément indicateur (80) pouvant être excité et un contacteur manométrique ou manocontacteur (64, 74) qui ne ferme le circuit passant par l'élément indicateur que lorsque le tiroir (48) est écarté de sa position de fermeture, le manocontacteur (64, 74) comportant un élément de commutation (64) actionné par le tiroir de soupape en forme de piston (48), qui ne ferme le circuit passant par l'élément indicateur (80) que dans la position d'ouverture du tiroir, caractérisée par les caractéristiques suivantes:

a) le premier raccord (34) de l'alésage de soupape (24) est destiné à un accumulateur de pression (14);

b) un dispositif de retardement (66, 68) réduit vitesse à laquelle le tiroir de soupape en forme de piston (48) passe de sa position de fermeture à sa position d'ouverture;

c) le dispositif de commande pilote actionné par la pression (28, 30, 64) comporte un canal de passage (28) s'étendant axialement jusqu'à l'intérieur de l'alésage de soupape (24), dans lequel est placée de façon à pouvoir effectuer des mouvements de va-et-vient en coulissant une tige (64) dont l'une des extrémités est en liaison avec ledit raccord (30) destiné à la source de liquide sous pression principale (12);

d) l'élément de commutation actionné par le tiroir (48) est cette tige (64) qui est en contact, dans la position d'ouverture du tiroir de soupape en forme de piston, avec un contact électrique (74).

2. Soupape selon la revendication 1, caractérisée en ce que le dispositif de retardement (88, 68) comporte un étranglement qui relie mutuellement les deux chambres de liquide raccordées aux extrémités du tiroir de soupape en forme de piston (48).

3. Soupape selon la revendication 2, caractérisée en ce que l'étranglement (66, 68) s'étend axialement à travers le tiroir de soupape en forme de piston (48).

4. Soupape selon l'une des revendications précédentes, caractérisée en ce que le tiroir de soupape en forme de piston (48) est retenu de façon amovible dans sa position de fermeture par un dispositif de blocage (70, 72).

HAUPTLENKVENTIL